# EUROPEAN PATENT APPLICATION

(11) **EP 1 962 463 A1**
(43) Date of publication of application: **27.08.2008**
(21) Application number: 07003924.3
(22) Date of filing: 26.02.2007
(51) Int. Cl.: H04L 27/26, H04L 1/06

(54) **Method and apparatus for coding transmit data in a MIMO-OFDM system**

(71) Applicant: Nokia Siemens Networks GmbH & Co. KG, 81541 München (DE)
(72) Inventor: Costa, Elena, 81739 München (DE); Frank, Tobias, 35305 Grünberg (DE); Klein, Anja, 64287 Darmstadt (DE); Schulz, Egon, Dr., 80993 München (DE)

(57) **Abstract**

The invention relates to a method and to an apparatus for coding data to be transmitted by use of a radio system with multiple antennas wherein data symbols to be transmitted in one block of the transmit signal are coded over multiple antennas using a Multiple-Antenna-Coding.

In order to find a method the flexibility in the assignment of resources while at the same time minimizing envelope fluctuations, it is proposed that data to be transmitted is precoded using a Non-Redundant Unitary Transformation before applying the Multiple-Antenna-Coding to the transformed elements.

## Description

### I. TECHNICAL FIELD OF THE INVENTION

The invention relates to a method and an apparatus for coding data to be transmitted by use of a radio system with multiple antennas, wherein the data is coded over multiple antennas in order to increase the band width efficiency of a mobile radio system.

### II. BACKGROUND OF THE INVENTION

The utilization of multiple antennas is well-known to significantly increase the band width efficiency of a mobile radio system. One class of multiple antenna schemes is based on adoption of the channel conditions. This class requires very accurate and up-to-date knowledge of the channel conditions which under various conditions, e. g. for high velocities of the users, cannot be provided at all or only at the expense of high signalling overhead.

Another class is based on averaging the channel variabilities and exploits the special diversity provided by multiple antennas. Promising representatives of this class of multiple access data coding schemes are Space-Time- or Space-Frequency coding schemes, which can be distinguished in Space-Time- or Space-Frequency-Block-Codes and Space-Time- or Space-Frequency-Trellis-Codes. These schemes do not require any general knowledge at the transmitter and, thus, can be regarded as an interesting option for many scenarios, in which adaptive utilization of the multiple antennas is impossible. An introduction to current schemes for coding multiple access data over multiple antennas is given in A.

Paulraj, R. Nabar, and D. Gore, "Introduction to Space-Time-wireless Communications", Cambridge University Press, Cambridge UK, first Edition, 2003. For Multiple-Antenna-Codes, which have been shown to provide good performance as well as low computation effort for encoding and decoding, the data to be transmitted is coded over different antennas, and, at the same time, over different time intervals (Space-Time-Codes) or frequency bands (Space-Frequency Codes), respectively. A code word is essentially "spread" in time and distributed over more than one channel in order to exploit spatial diversity. Alternatively, the data to be transmitted is coded over different frequency bands (in case of block codes). In the well-known Alamouti code (cf. S.M. Alamouti, "The Simple Transmit Diversity Technique for Wireless Communication", IEEE Journal on Selected Areas in Communications, volume 16, No. 8, pp 1451 - 1458, October 1998), two data symbols are coded over two transmit antennas and over two consecutive time intervals, for example two symbol durations. For Orthogonal Frequency Division Multiplex (OFDM) based schemes, instead of two consecutive time periods, two adjacent subcarriers can be used. However, for single carrier schemes like Single Carrier Frequency Division Multiple Access (SC-FDMA) including Interleaved Frequency Division Multiple Access (IFDMA) or Localized Frequency Division Multiple Access (LFDMA), which are currently under investigation for B3G/4G mobile radio systems, the use of Multiple-Antenna-Coding is limited to the utilization of consecutive time intervals, since, in contrast to OFDM-based schemes, there is no transmission of single data symbols on dedicated subcarriers.

The requirement of utilization of consecutive time intervals for Multiple-Antenna-Coding causes restrictions to the consecutive time intervals that are assigned to a certain user.

Since in any case at least two consecutive time intervals have to be assigned, the application of Multiple-Antenna-Codes to SC-FDMA-schemes limits the power efficiency of the mobile stations, because for the time intervals used for Multiple-Antenna-Coding the terminals cannot switch into sleep modes in order to saver battery power.

A method for application of Multiple-Antenna-Codes to single carrier schemes is presented in T. Frank, A. Klein, E. Costa, and A. KUhne, "Low complexity and Power Efficient Space-Time-Frequency-Coding for OFDMA", in proceedings of 15th Mobile and Wireless Communications Summit, Mykonos, Greece, June 2006,.

However, for utilization of one Non-Redundant Unitary Transformation (e.g., a DFT) jointly for all data symbols of one block assigned to a specific user, the constraints to the number of consecutive time intervals assigned to a specific user as well as the problem of power inefficiency due to the restrictions on micro sleep modes for mobile terminals cannot be avoided.

Solutions for the problem of minimizing the number of consecutive time intervals assigned to a specific user can be obtained by assignment of multiple SC-FDMA signals to one user. However, in this case, the envelope fluctuations of the transmit signal is increased, resulting in a higher Peak-to-Average Power Ratio (PAPR), which in turn results in higher costs for the amplifier.

### III. SUMMARY OF THE INVENTION

The Invention has been made to overcome the above discussed and other drawbacks and obstacles relating to the art.

This may include the problem of finding a method and apparatus that allows assigning only one time interval to a data block encoded over multiple antennas and at the same time provides low envelope fluctuation and exploitation of spatial diversity. In order to minimize envelope fluctuations, one goal achieved by embodiments of the invention is to provide a method and an apparatus allowing for the utilization of one Non-Redundant Unitary Transformation jointly for all data symbols of one block, in particular a block being assigned to a specific user, and at the same time to apply Multiple-Antenna-Codes from orthogonal and non-orthogonal design for single carrier schemes like SC-FDMA.

According to one aspect, the invention provides a method for coding data to be transmitted by use of a radio system with multiple antennas, wherein the data symbols to be transmitted in one block of the transmit signal are coded over multiple antennas using a Multiple-Antenna-Coding and wherein the Multiple-Antenna-Coded elements are mapped to subcarriers of the radio system.

According to one aspect of the invention, the data to be transmitted is precoded using a Non-Redundant Unitary Transformation before applying the Multiple-Antenna-Coding to the transformed elements. By performing the Multiple-Antenna-Coding on the transformed elements, of course, the time direction is replaced by a frequency direction, such that the resulting entanglement could be described as a "Space-Frequency-Block-Coding".

According to one aspect of the invention, the Multiple-Antenna-Code is a Block-Code entangling the data symbols to be transmitted over different antennas. A Block-Code in the sense of the invention is a code, wherein in a first group of subcarriers in a channel of a first antenna is entangled with the elements to be transmitted in a second group of subcarriers in a channel of at least one second antenna, wherein the second group of subcarriers comprises the subcarriers corresponding in frequency with the subcarriers of the first group of subcarriers.

The Non-Redundant Unitary Transformation is preferably chosen as a Discrete Fourier-Transform. However, the invention is not limited to these and any suitable Walsh-Hadamard Transformation may be chosen.

The block-coded elements of the transformed data may be transmitted over different subchannels within one data block of the transmit signal, such that the user does not have to receive two consecutive data blocks of the transmit signal. As a consequence, in an embodiment where the data block is assigned to a specific user, the time division multiple access component of the user can be diminished and the sleep time between two consecutive data blocks of the transmit signal being assigned to a specific user can be increased. This results in a longer sleep time between two consecutive data blocks assigned to a specific user and in saving of battery power. Of course, the same advantages can be achieved in a broadcast scenario where the data block may be assigned to a specific channel.

According to an advantageous embodiment of the invention, it is proposed that the data symbols of the specific user are subdivided into blocks. This allows for an easy implementation of Block-Interleaved Frequency Division Multiple Access schemes. Moreover, it is proposed that the precoding using a Non-Redundant Unitary Transformation as applied to each block of the data symbols separately.

The invention is particularly well applicable if the data to be transmitted is multiple access data relating to a specific user since time-division multiple access-schemes allow for comparably long sleep times. In the latter case, the Multiple-Antenna-Coded elements may be mapped to subcarriers of the radio system being assigned to the specific user.

If the Multiple-Antenna-Coded and transformed elements are subjected to an Orthogonal-Frequency-Division-Multiple-Access-Coding, the data can be easily mapped to a single time interval corresponding to a single block of transmit data, including a multitude of symbols coded in individual subcarriers.

If the subcarriers are subdivided into blocks of subcarriers, wherein each of the blocks contains a subset of the subcarriers assigned to the specific user, a favourable block-interleaved subcarrier allocation can be achieved, allowing for a low pilot signal overhead, since, compared to Interleaved Frequency Division Multiple Access schemes, interpolations can be used for frequency estimates within one block.

The decoding can be made particularly simple, if the subcarriers are subdivided into blocks of subcarriers, wherein each of the blocks contains only the subcarriers assigned to one specific user.

The Orthogonal-Frequency-Multiple-Access-Coding can be performed with very low computational complexity, if the Orthogonal-Frequency-Multiple-Access-Coding is an Inverse Discrete Fourier Transform.

The signals of the different antennas can be disentangled with low loss due to noise in the transmission channels, if the Multiple-Antenna-Coding uses an orthogonal code for the respective antenna signals. A particularly simple implementation may be achieved if the orthogonal code is the well-known Alamouti-Code.

In an alternative embodiment however, the Multiple-Antenna-Code uses a non-orhtogonal code with a transformation matrix having non-orthogonal lines and/or columns. An interesting example is the well-known ABBA-Code.

A particularly simple Multiple-Antenna-Coding scheme with low computational complexity can be achieved if the Multiple-Antenna-Coding is applied to pairs of subcarriers or to pairs of elements of the transformed data symbols. In particular, the pairs of subcarriers may be composed of adjacent subcarriers.

In general, the Multiple-Antenna-Coding may be applied to a group of more than two subcarriers and the extension to multiple receive antennas is straight forward.

In addition, according to a further aspect, the invention may provide an apparatus for coding multiple access data to be transmitted in a radio system, the apparatus comprising a coding means for coding the data symbols of a specific user to be transmitted in one block of the transmit signal over different antennas and over a number of time intervals using a Multiple-Antenna-Coding and a mapping means for mapping the Multiple-Antenna-Coded elements to subcarriers of the radio system assigned to the specific user.

According to one aspect, the coding means is configured to precode the data to be transmitted using a Non-Redundant Unitary Transformation (DFT) before applying the Multiple-Antenna-Coding to the transformed elements.

It may be further proposed that the coding means is configured to subdivide the data symbols into blocks and that it performs the precoding in such a way that the Non-Redundant Unitary Transformation is applied to each block of data symbols separately.

The transformed and coded data can be easily transmitted in one block of the transmit signal, if the coding means is configured to subject the Multiple-Antenna-Coded and transformed elements to an Orthogonal-Frequency-Multiple-Access-Coding.

The pilot symbol overhead may be reduced if the subcarriers are subdivided into blocks of subcarriers, wherein each of the blocks contains a subset of subcarriers assigned to the specific user.

A particularly transparent coding can be achieved, if the coding means is configured to subdivide the subcarriers into blocks, wherein each of the blocks contains only the subcarriers assigned to one specific user.

If the coding means is configured to perform the Orthogonal-Frequency-Multiple-Access-Coding by use of an inverse Non-Redundant Unitary Transformation, efficient Fast Fourier Transform numerical schemes may be used. A disentanglement of the codes resulting from the different antennas can be achieved in a particularly distortion-free manner, if the Multiple-Antenna-Coding uses orthogonal codes for the respective antenna signals.

If the coding means is configured to apply the Multiple-Antenna-Coding to pairs of subcarriers, a simple and effective code such as the Alamouti code may be applied. The coding is particularly transparent, if the coding means is configured to compose the pairs of subcarriers of adjacent subcarriers.

### IV. BRIEF DESCRIPTION OF THE DRAWINGS

Fig. 1 shows schematically an embodiment of a method for coding multiple access data to be transmitted by use of a radio system with multiple antennas according to the invention.
Fig. 2 is an illustration of the Multiple-Antenna-Coding algorithm being applied to the transformed elements of the data to be transmitted.
Fig. 3 illustrates the transmit signal generated using the method for coding multiple access data according to the invention.
Fig. 4 illustrates a transmit signal generated by a method according to the prior art.
Fig. 5 shows an apparatus for coding multiple access data to be transmitted by use of a radio system with multiple antennas.

### V. DETAILED DESCRIPTION OF THE EMBODIMENT

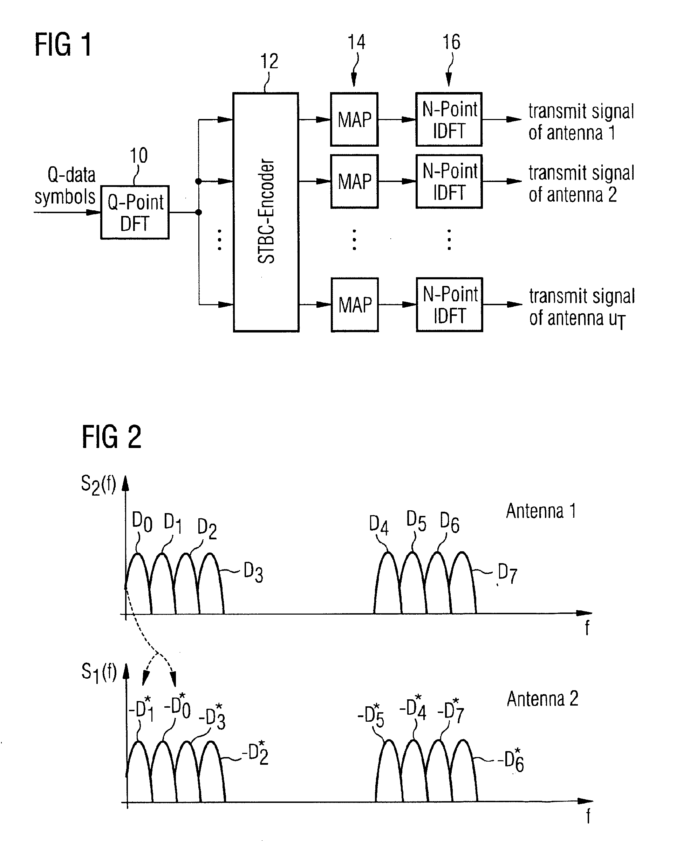

Fig. 1 illustrates a method for coding multiple access data to be transmitted by use of a radio system with multiple antennas. In the radio system, the data symbols of a specific user to be transmitted in one block of the transmit signal, are coded over multiple antennas using a Multiple-Antenna-Coding. The Multiple-Antenna-Coded elements of the data symbols of the specific user are mapped to subcarriers of the radio system assigned to the specific user.

In a first precoding step 10, the data to be transmitted is precoded using a Non-Redundant Unitary Transformation. In the embodiment of Fig. 1, the Non-Redundant Unitary Transformation is a Discrete Fourier Transformation (DFT) being implemented using a well-known Fast-Fourier-Transform (FFT) Algorithm. If the data block relating to the specific user comprises a number Q of data symbols, the Non-Redundant Unitary Transformation performed in step 10 is a Q-point DFT. In a subsequent processing step 12, a Multiple-Antenna-Coding to be described with reference to Fig. 2 later on, is applied to the transformed elements.

In a mapping step 14, each of the transformed and coded elements of the data to be transmitted is mapped on the Q subcarriers being assigned to the specific user. In an Orthogonal-Frequency-Multiple-Access-Coding step 16, an Orthogonal-Frequency-Multiple-Access-Coding is performed by means of a applying an N-point inverse Discrete Fourier Transformation (IDFT), where N is the total number of subcarriers in the radio system. If a different non-redundant Unitary Transformation is chosen in step 10, the Orthogonal-Frequency-Multiple-Access-Coding step 16 may be adapted in a suitable way depending on the inverse of the transformation matrix used in step 10.

In the mapping step 14, the mapping is performed in such a way that the subcarriers of the specific user are equally distributed over the number of available antennas.

The Multiple-Antenna-Coding performed in step 12 uses a simple orthogonal code for the respective antenna signals and is applied to pairs of Fourier Transformed data elements.

As shown in Fig. 2, a pair of adjacent data elements is selected by an Space-Time-Block-Coding (STBC) Encoder, e. g. D₀ and D₁, and the complex conjugates D₀* and D₁* of the selected, transformed data elements D₀ and D₁ are calculated. Subsequently, the STBC-encoder calculates the inverse -D₁* of the complex conjugate D₁* of the second element D₁ chosen by multiplying the element D₁ with -1.

In the mapping step 14, the pair of selected elements Do, D₁ is mapped onto adjacent subcarriers in a first antenna. The inverse of the complex conjugate -D₁^{*} of the second element of the pair D₁ is mapped on the subcarrier of the second antenna (antenna 2) corresponding in frequency with the subcarrier the first element D₀ of the pair is mapped on in the first antenna (antenna 1). At the same time, the complex conjugate D₀* of the first element D₀ of the pair is mapped onto the subcarrier of the second antenna (antenna 2) corresponding in frequency with the subcarrier of antenna 1, where the second element D₁ of the pair of transformed elements is mapped on.

As shown in Fig. 2, the subcarriers assigned to a specific user are organized in blocks being equidistantly distributed over the whole available band width of the antennas.

Although 2 shows an example where two antennas are used, the generalization to more than two antennas and to Multiple-Antenna-Coding algorithms entangling more than two data symbols is straightforward.

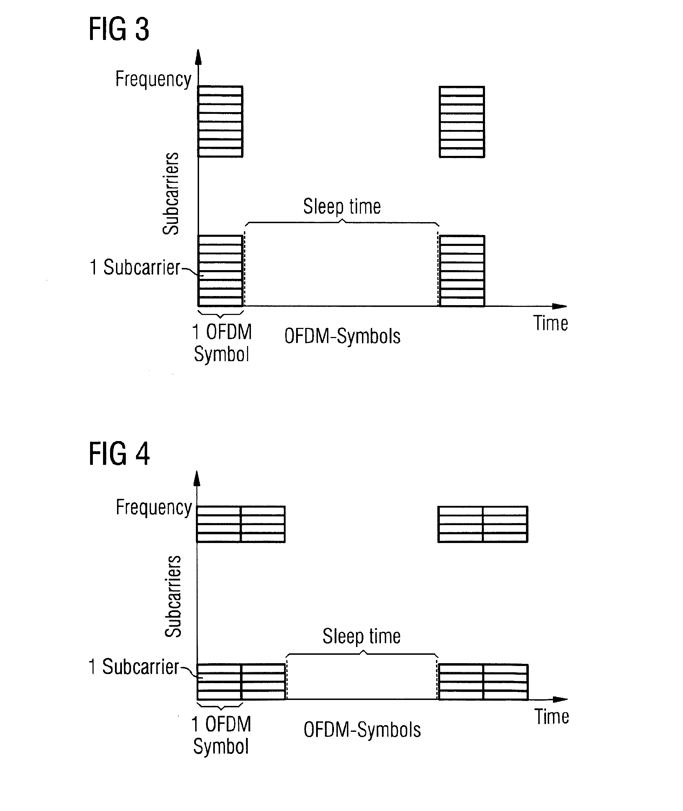

Fig. 3 schematically depicts the transmit signal relating to the specific user in time domain. Since the entire encoded data may be transmitted in the duration of one OFDM symbol, the power efficiency of the signal transmission can be significantly increased, since the number of consecutive time intervals that are required for Multiple-Antenna-Coding, is reduced to 1, and consequently, the terminals can switch to power-saving sleep modes for a longer sleep time between two blocks of the transmit signal being assigned to the specific user.

Just for comparison, a conventional scheme according to the prior art is shown in Fig. 4. The minimum time duration of consecutive resources is 2, since the signals of two consecutive blocks of the transmit signal has to be entangled according to the Multiple-Antenna-Coding scheme chosen. Therefore, the sleep time of the terminals is at least the duration of one OFDM symbol shorter than the sleep time as proposed according to the invention.

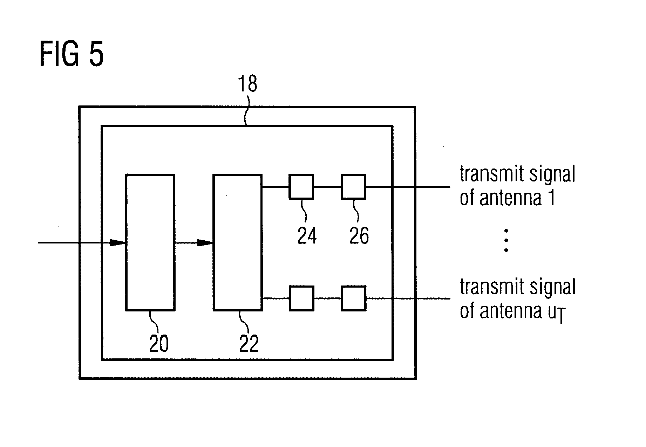

Fig. 5 shows schematically an apparatus for coding multiple access data to be transmitted by use of a radio system with multiple antennas. The apparatus may be comprised in the radio system or alternatively provide an external supply of coded data to a radio system. In a favourable embodiment of the invention, the apparatus is comprised in a mobile phone having multiple antennas.

A coding means 18 of the apparatus comprises a Fourier Transformer 20, performing a Non-Redundant Unitary Transformation, namely a Discrete Fourier Transformation, on input data and outputting the transformed elements. The output of the Fourier Transformer 20 is connected with the input of a STBC-encoder 22, performing a Multiple-Antenna-Coding as described above, with reference to Fig. 2.

The STBC-encoder 22 has multiple outputs, wherein each output supplies the transformed and Multiple-Antenna-Coded data to be transmitted over one antenna respectively. The output data of the individual outputs of the STBC-encoder 22 is transmitted to mapping means 24, mapping the received data symbols to the subcarriers of the respective antenna signals. The outputs of the mapping means 24 are input to Fourier Transformers 26 respectively, performing an N-point Inverse-Non-Redundant Unitary Transformation in order to generate an Orthogonal-Frequency-Multiple-Access-Coding of the signal to be transmitted. The output of the Fourier Transformer 26 is the transmit signal of the respective antenna.

It is noted that in alternative embodiments, the coding means is configured to subdivide the subcarriers into blocks of subcarriers, wherein each of the blocks contains a subset of subcarriers assigned to a specific user, or wherein each of the blocks contains only the subcarriers assigned to a specific user. The individual blocks may be separated by guard intervals and/or pilot signals.

In a further alternative embodiment, the positions of the first Fourier Transformer 10 and of the STBC-encoder may be interchanged, such that the coding means is configured to subdivide the data symbols into blocks and to apply the precoding using the DFT to each block of data symbols separately.

It is noted that within the group of subcarriers, the Multiple-Antenna-Coding is applied to, the channel must not change. The proposed scheme may be applied to any DFT-precoded OFDMA-scheme and any Multiple-Antenna-Code may be utilized, from orthogonal as well as from non-orthogonal design. Moreover, also other implementations of the scheme may be used.

As shown above, the restrictions on the assignments of time intervals to different users are relaxed according to the invention, i. e. the assignment of resources is more flexible. At the same time, there is no need to assign two or more consecutive resources at a time to a specific user. Thus, the power efficiency can be significantly increased, since the number of consecutive time intervals that are required for Multiple-Antenna-Coding is decreased, and, consequently, the terminals can switch to power saving sleep modes for a longer time. Finally, due to the joint Non-Redundant Unitary Transformation over all data symbols of one block assigned to a specific user, the Peak-to-Average Power Ratio (PAPR) of the transmit signal at each transmit antenna is lower compared to other solutions based on the summation of different single carrier-Frequency Division Multiple Access signals. As a consequence, cost saving amplifiers may be used for the transmission of the signal.

## Claims

1. Method for coding data to be transmitted by use of a radio system with multiple antennas wherein data symbols to be transmitted in one block of the transmit signal are coded over multiple antennas using a Multiple-Antenna-Coding
**characterized in that** the data to be transmitted is precoded using a Non-Redundant Unitary Transformation before applying the Multiple-Antenna-Coding to the transformed elements.

2. The method of claim 1, **characterized in that** the Non-Redundant Unitary Transformation is a Discrete Fourier Transformation.

3. The method of one of the preceding claims, **characterized in that** the Multiple-Antenna-Code is a Block-Code entangling the data symbols to be transmitted over different antennas.

4. The method of one of the preceding claims, **characterized in that** the data symbols are subdivided into blocks.

5. The method of claim 4, **characterized in that** the precoding using the Non-Redundant Unitary Transformation is applied to each block of data symbols separately.

6. The method of one of the preceding claims, **characterized in that** the data to be transmitted is multiple access data relating to a specific user.

7. The method of claim 6, **characterized in that** the Multiple-Antenna-Coded elements are mapped to subcarriers of the radio system assigned to the specific user.

8. The method of one claim 7, **characterized in that** the subcarriers are subdivided into blocks of subcarriers, wherein each of the blocks contains a subset of subcarriers assigned to the specific user.

9. The method of claim 7, **characterized in that** the subcarriers are subdivided into blocks of subcarriers, wherein each of the blocks contains only the subcarriers assigned to one specific user.

10. The method of one of the preceding claims, **characterized in that** the Multiple-Antenna-Coded and transformed elements are subjected to an Orthogonal-Frequency-Multiple-Access coding.

11. The method of claim 7 and 10, **characterized in that** the Orthogonal-Frequency-Multiple-Access coding comprises an Inverse Discrete Fourier Transformation.

12. The method of one of the preceding claims, **characterized in that** the Multiple-Antenna-Coding uses orthogonal codes for the respective antenna signals.

13. The method of claim 12, **characterized in that** the Multiple-Antenna-Coding uses an Alamouti-Code for coding the respective antenna signals.

14. The method of one of claims 1 - 11, **characterized in that** the Multiple-Antenna-Coding uses a non-orthogonal code.

15. The method of one of the preceding claims, **characterized in that** the Multiple-Antenna-Coding is applied to pairs of subcarriers.

16. The method of claim 15, **characterized in that** the pairs of subcarriers are composed of adjacent subcarriers.

17. The method of one of the preceding claims, **characterized in that** the Multiple-Antenna-Coding is applied to a group of more than 2 subcarriers.

18. Apparatus for coding data to be transmitted by use of a radio system with multiple antennas, the apparatus comprising a coding means (18) for coding data symbols to be transmitted in one block of the transmit signal coded over different antennas using a Multiple-Antenna-Coding and **characterized in that** the coding means (18) is configured to precode the data to be transmitted using a Non-Redundant Unitary Transformation before applying the Multiple-Antenna-Coding to the transformed elements.

19. Apparatus according to claim 18, **characterized in that** the Non-Redundant Unitary Transformation is a Discrete Fourier Transformation.

20. Apparatus according to one of claims 18 or 19, **characterized in that** the Multiple-Antenna-Code is a Block-Code entangling data symbols to be transmitted over different antennas.

21. Apparatus for coding multiple access data according to one of claims 16 - 18, **characterized in that** the coding means (18) is configured to subdivide the data symbols into blocks.

22. Apparatus for coding multiple access data according to claim 21, **characterized in that** the coding means (18) is configured to apply the precoding using the Discrete Fourier Transform to each block of data symbols separately.

23. Apparatus according to one of claims 18 - 22, **characterized in that** the data to be transmitted is multiple access data relating to a specific user.

24. Apparatus according to claim 23, **characterized in that** coding means (18) is configured to map the Multiple-Antenna-Coded elements onto subcarriers of the radio system assigned to the specific user.

25. Apparatus for coding multiple access data according to of one of claims 18 to 24, **characterized in that** the coding means (18) is configured subject the to Multiple-Antenna-Coded and transformed elements to an Orthogonal-Frequency-Multiple-Access coding.

26. Apparatus for coding multiple access data according to of one of claims 18 to 25, **characterized in that** the coding means is configured to subdivide the subcarriers into blocks of subcarriers, wherein each of the blocks contains a subset of subcarriers assigned to the specific user.

27. Apparatus for coding multiple access data according to one of claims 20 to 27, **characterized in that** the coding means is configured to subdivide the subcarriers into blocks of subcarriers, wherein each of the blocks contains only the subcarriers assigned to one specific user.

28. Apparatus for coding multiple access data according to claims 24 and 25, **characterized in that** the Orthogonal-Frequency-Multiple-Access coding comprises Inverse Discrete Fourier Transformation.

29. Apparatus for coding multiple access data according to one of claims 18 to 28, **characterized in that** the coding means (18) is configured to use orthogonal codes for the respective antenna signals in the Multiple-Antenna-Coding.

30. Apparatus for coding multiple access data according to one of claim 29, **characterized in that** coding means (18) is configured to use an Alamouti-Code for coding the respective antenna signals

31. Apparatus for coding multiple access data according to one of claims 18 to 28, **characterized in that** the coding means (18) is configured to use non-orthogonal codes for the respective antenna signals in the Multiple-Antenna-Coding.

32. Apparatus for coding multiple access data according to one of claims 18 to 31, **characterized in that** the coding means is configured to apply the Multiple-Antenna-Coding to pairs of subcarriers.

33. Apparatus for coding multiple access data according to claim 32, **characterized in that** the pairs of subcarriers are composed of adjacent subcarriers.

34. Apparatus for coding multiple access data according to one of claims 18 to 33, **characterized in that** the coding means (18) is configured to apply the Multiple-Antenna-Coding to a group of more than 2 subcarriers.
